**Europäisches Patentamt**

**European Patent Office**

**Office européen des brevets**

(19)

(11) **EP 0 957 416 B1**

(12) **EUROPEAN PATENT SPECIFICATION**

(45) Date of publication and mention
of the grant of the patent:
**22.12.2004 Bulletin 2004/52**

(51) Int Cl.⁷: **G05B 13/02**

(21) Application number: **99109629.8**

(22) Date of filing: **14.05.1999**

(54) **Global control method**

Globales Steuerungsverfahren

Système de commande global

(84) Designated Contracting States:
**DE FR GB IT**

(30) Priority: **14.05.1998 JP 13221398**

(43) Date of publication of application:
**17.11.1999 Bulletin 1999/46**

(73) Proprietor: **YAMAHA HATSUDOKI KABUSHIKI
KAISHA
Iwata-shi Shizuoka-ken (JP)**

(72) Inventor: **Kamihira, Ikkai
Iwata-shi, Shizuoka-ken (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 772 106       WO-A-96/02025
DE-A- 4 301 391       DE-A- 19 643 884
GB-A- 2 307 566**

• **M.INABA ET AL: "ADAPTIVE CONTROL
SYSTEMS SWITCHED BY CONTROL AND
ROBUST PERFORMANCE CRITERIA"
PROCEEDINGS OF THE 1996 IEEE
CONFERENCE ON EMERGING TECHNOLOGIES
AND FACTORY AUTOMATION , vol. 2, 18
November 1996 (1996-11-18), pages 690-696,
XP002110463 USA**
• **T.ARAKAWA ET AL: "NATURAL MOTION
GENERATION OF BIPED LOCOMOTION ROBOT
USING HIERARCHICAL TRAJECTORY
GENERATION METHOD CONSISTING OF GA,EP
LAYERS" PROCEEDINGS 1997 IEEE
INTERNATIONAL CONFERENCE ON ROBOTICS
AND AUTOMATION, vol. 1, 20 April 1997
(1997-04-20), pages 211-216, XP002110464 USA**

**Description**

The present invention relates to a method of global control of characteristics of a final controlled object by controlling a plurality of related controlled objects.

When global control is applied to a controlled object, normally information is received regarding a plurality of parameters such as the operating state of the controlled object, its operational environment, etc.

With this control method, when the characteristics of the controlled object are linear, it is possible to express those characteristics as a simple function of input information and output information (degree of control), but when the characteristics of the controlled object, an engine for example, are non-linear, the relationship between the input information and the output information cannot be expressed as a function, and it is necessary to determine the output information values with respect to the input information by experiment or similar means.

However, in recent years, with the increasing number, diversity and higher performance of control applications, the characteristics of the final controlled object are controlled through the exercise of control on a plurality of related controlled objects. Since such a control method requires that the control parameters for each of the controlled objects relating to the final controlled object be optimally maintained in their relationship with the other control parameters in order to obtain the target characteristics for the final controlled object, a great deal of time and work has to be expended empirically determining these control parameters.

Further, when using the foregoing conventional control method, it is necessary to imagine the characteristics of the projected product user (preferences, skills, personality, operational, conditions) when designing and setting before delivery, but due to the individual differences and preferences among human beings, it is impossible to provide a product having characteristics satisfactory to all users. One method of making this determination is to allow the user to correct the settings according to his own preferences after purchasing the product, but when there are a number of controlled objects as described above, and when they are all interrelated, it would be necessary to correct the settings to maintain the optimal control parameters for all the controlled objects, and this is not easy, even for a knowledgeable expert.

Accordingly, it is an objective of the present invention to provide a method of global control as indicated above which facilitates that the various control parameters for the controlled objects can easily be optimized.

This objective is solved in an inventive manner by a method of global control of the characteristics of a final controlled object by controlling a plurality of related controlled objects, whereby each related controlled object is controlled by at least one corresponding control module, wherein the control parameters for each of the corresponding control modules are influenced by a evolutionary algorithm, such as a generic algorithm, and whereby each corresponding evolutionary algorithm responds at least either to the predetermined target characteristics of the final controlled object, or to the conditions under which its corresponding related controlled object is operating.

Such an evolutionary algorithm may be the EVONET.

In that case, it is advantageous when said control parameters are in addition influenced by the user characteristics for the controlled object, and/or the conditions under which the corresponding related controlled object is operating.

According to a preferred embodiment of the present invention, each related controlled object is controlled by at least two corresponding control modules, the first one being an autonomous evolution control module and the second being an interactive evolution control module.

Preferably, said method is composed of two or three layers, such as a reflection layer, a learning layer and an evolution/adaptation layer.

According to another embodiment of the present invention, said reflection layer receives information inputs about the external world, as operational conditions or as an operational environment of the related controlled objects, and in that said reflection layer contains a plurality of control modules which determine the extent of operation of various means controlling the plurality of the corresponding related controlled objects, which are related to said final controlled object.

Further, it is advantageous when said learning layer, which learns the evoluted results of various control modules of said evolution/adaptation layer is equipped with the same number of control modules as said evolution/adaptation layer and is capable of memorizing past evolutionary results from the learning layer.

According to a preferred embodiment of the present invention, said evolution/adaptation layer is composed of an evaluation unit and an evolution/adaption unit.

Other preferred embodiments of the present invention are laid down in further dependent claims.

In the following, the present invention is explained in greater detail with respect to several embodiments thereof in conjunction with the accompanying drawings, wherein:

Figure 1 is a block diagram of the basic concept for the global control method of this invention.

Figure 2 is a flow chart showing an example of serial evolutionary processing by the control modules 1 through $k$ in the evolution/adaptation layer.

Figure 3 is a flow chart showing an example of parallel evolutionary processing by the control modules through *k* in the evolution/adaptation layer.

Figure 4 is a flow chart showing an example of the serial evolutionary processing by the control modules 1 through *k* in the evolution/adaptation layer.

Figure 5 is a diagram showing the relationship between the engine 1 and the control apparatus 10 that is exercising global control over.

Figure 6 is a simplified block diagram of the foregoing control apparatus 10.

Figure 7 is a simplified block diagram of the air intake volume control module.

Figure 8 is a graph showing the example of several static properties of the throttle.

Figure 9 is a graph showing the example of several dynamic properties of the throttle.

Figure 10 is a simplified block diagram of the air/fuel ratio control module.

Figure 11 is a diagram of the neural network circuit used in the first control module and second control module.

Figure 12 is a flow chart showing the flow of evolutionary processing of the first control module using a genetic algorithm.

Figure 13 is a conceptual diagram showing the Junction coefficients of the neural network circuit in the first control module being coded as genes.

Figure 14 is a flow chart showing the flow of evolutionary processing of the second control module using a genetic algorithm.

Figure 15 is a conceptual diagram showing the junction coefficients of the neural network circuit in the second control module being coded as if they were genes.

Figure 16 is a diagram showing the preliminary evaluation processing for each individual on a time allotment basis.

Figure 17 is a conceptual figure showing the way the instruction data is captured using the learning control module of the learning layer.

Figure 18 is a conceptual figure showing the learning by the learning layer using a CMAC for only the new instruction data.

Figure 19 is a flow chart showing the global flow of control with regard to the parallel processing of evolution/adaptation layer and the learning layer.

Figure 20 is a flow chart showing the global flow of control with regard to the serial processing of evolution/adaptation layer and the learning layer.

A number of embodiments of the global control method of this invention will be described below with reference to the figures.

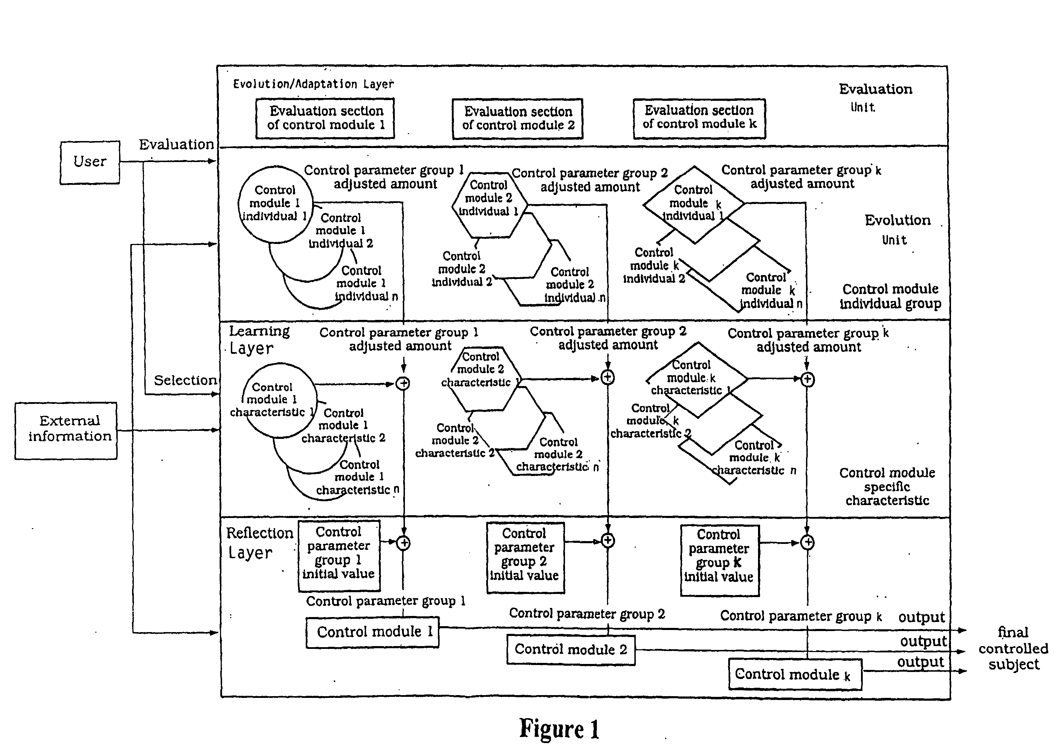

Figure 1 is a block diagram showing the basic concept of the -global control method of this invention. As shown in the figure, this global control method is composed of three layers, a reflection layer, a learning layer, and an evolution/adaptation layer.

The reflection layer receives information inputs about the external world such as operational conditions, or operational environment of the controlled object, and it contains control modules 1 through n which determine the extent of operation of various means that control the plurality of the controlled objects that are related to the final controlled object. The numerical relationship between the external world information and the various extents of operation for the control means may be incorporated into the control system using a map, neural network, fuzzy neural network, or sub-supposition architecture, etc.

The learning layer learning the evolved results for the various control modules 1 through k of the evolution/adaptation layer is equipped with control modules 1 through k. Further, the learning layer has the capability to memorize past evolutionary results (characteristics 1 through n) from the learning layer. If required, the past evolutionary results 1 through n may be made operator-selectable.

In the above described global control method, the evolutionary processing performed y the various control modules 1 through k may be performed in parallel or in series.

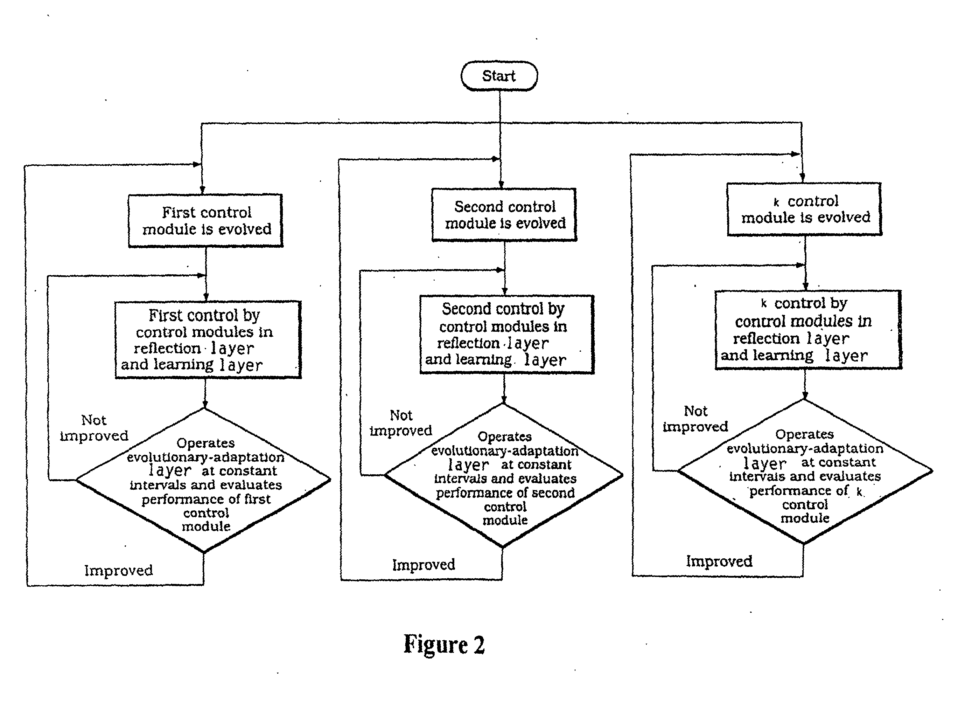

Figure 2 is a flow chart showing the example of parallel evolutionary processing being performed by the control modules 1 through k in the evolution/adaptation layer. In this case, the various control modules 1 through k in the evolution/adaptation layer work in parallel unaffected by the evolutionary state of the other control modules. At the conclusion of evolutionary processing, the evolutionary results are learned by the corresponding, control modules 1 through k in the learning layer. Control is then exerted over the control modules 1 through n of the reflection layer using the corrected values emitted by the modules 1 through k of the learning layer.

After the completion of evolution processing, the various modules 1 through k of the evolution/adaptation layer can be operated over a specific time range, and then the evolutionary results can be reprocessed in the control modules 1 through k to improve their properties.

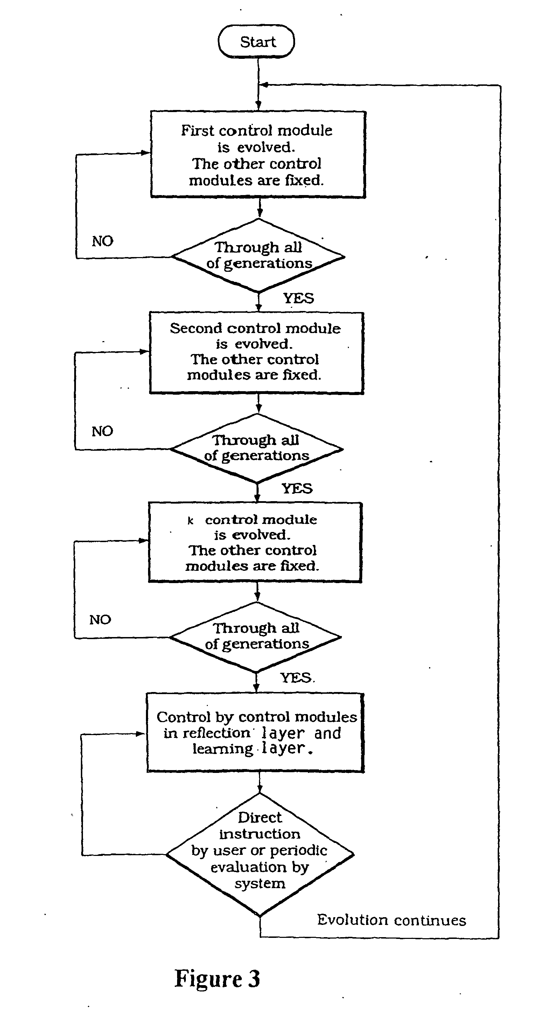

Figure 3 is a flow chart showing an example of the series evolutionary processing of the various control models 1 through k of the evolution/adaptation layer. In this case, evolutionary processing by the control modules 1 through k of the evolution/adaptation layer is implemented in a predetermined generation number sequence. When one of the control modules 1 through k is implements evolutionary processing, the other modules are not doing so. The learning in the learning layer may be carried out at the conclusion of evolutionary processing by each of the control modules, or after processing has been completed by all the control modules. When the evolutionary processing by all the control modules 1 through k has completed a specific number of generations, the correcting outputs from the control modules 1 through k correct the control parameters used in the reflection layer to control the control modules 1 through k.

After the conclusion of evolutionary processing, the control modules 1 through k of the evolutionary/ adaptation layer can be operated over a specific period of time, and then those evolutionary processing results can be sequentially reprocessed in evolving manner by the control modules to improve performance. It is further possible to allow the operator to directly implement such resumption of evolutionary processing.

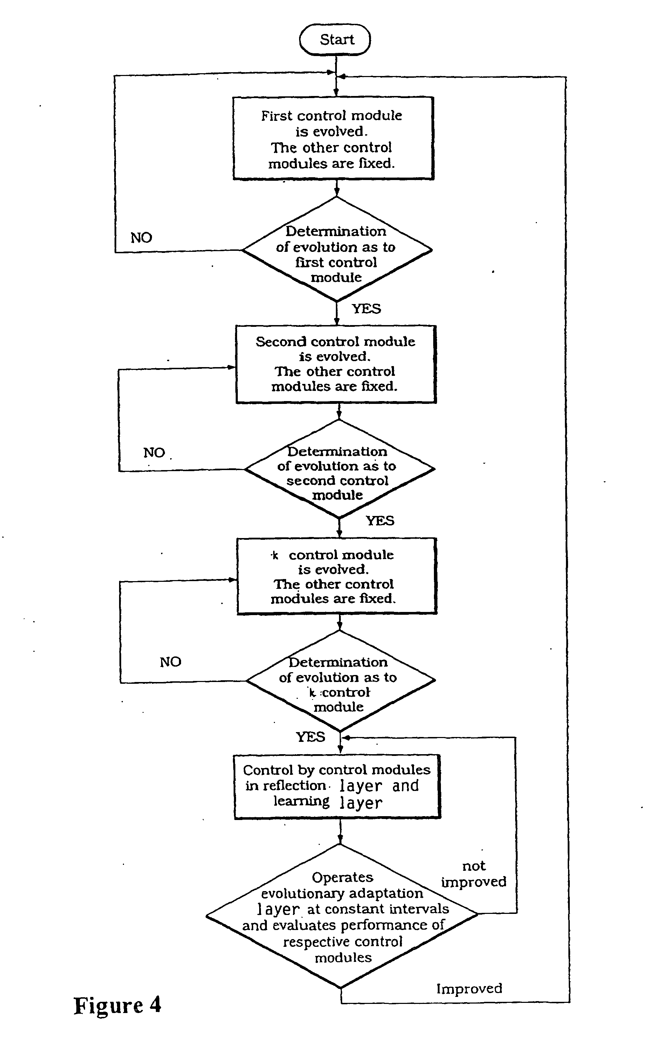

Figure 4 shows a flow chart of another example of series evolutionary processing by the control modules 1 through k of the evolution/adaptation layer. In this case, evolutionary processing by each of the control modules I through k of the evolution/adaptation layer is carried out until the evolutions from each control model converge. This convergence of the evolutions is based on the predetermined conclusions for evolution values.

With the foregoing structure, because of the evolution/adaptation layer, the control parameters for the control modules of the reflection layer have evolved based on at least the target characteristics for the final controlled object, the user idlosyncracy, the final controlled object, the operating conditions for the controlled object, and/or the usage environment of the controlled object. Accordingly, the characteristics of the final controlled object are produced along the lines of the evolution in the evolution/adaptation layer.

Also, as shown in Figure 2, when evolutionary processing in the evolution/adaptation layer is parallel among the control modules, the characteristics of the control module evolution do not set the direction of the evolution of the (other) control modules, and accordingly, the diversity with which the performance can be improved through evolution growth.

Further, as shown in Figures 3 and 4, when evolutionary processing of the various control modules in the evolution/adaptation layer is performed serially, evolutionary processing performed by the first control module sets the direction for the evolution, thereby allowing the evolution to converge in a short period of time, and to obtain the optimal values in a short period of time.

Next, an implementation of the global control method of this invention applied to a vehicle engine will be explained (hereinafter meaning engines for any type of vehicle).

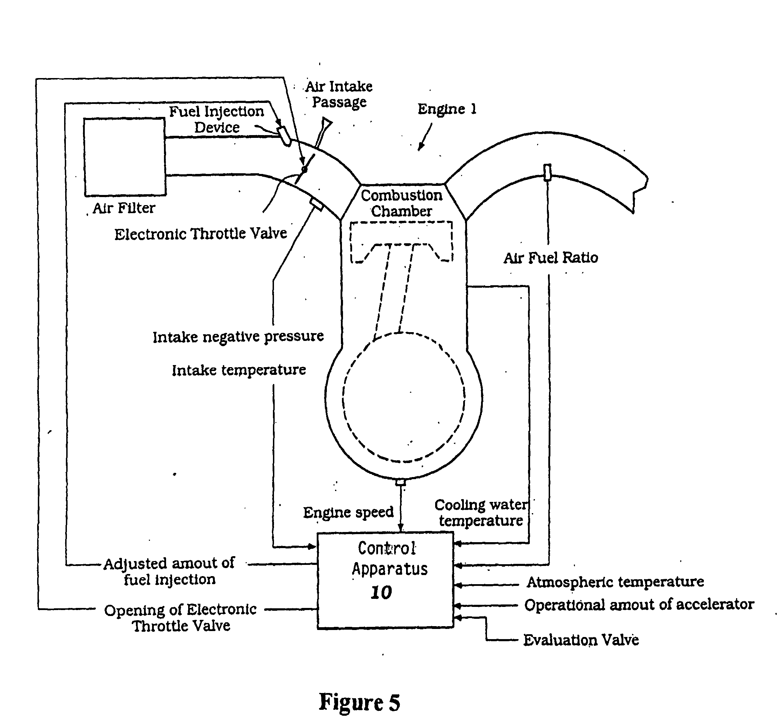

Figure 5 is a diagram showing the relationship between the engine 1 and the global vehicle control method implemented by the control apparatus 10.

The control apparatus 10 is structured to support both good fuel economy and "drivability." For purposes of this specification "drivability" shall mean the engine output response characteristics when the throttle is operated.

As is shown in the figure, the control apparatus 10 receives inputs about the engine RPM, air intake negative pressure, amount of accelerator operation, atmospheric pressure, air intake temperature, coolant temperature, etc. It then operates the fuel injection device and the electronic throttle valve based upon these inputs to control the amount of fuel injection and amount of air intake to thereby exercise global control of the engine in order to obtain both good fuel economy and drivability.

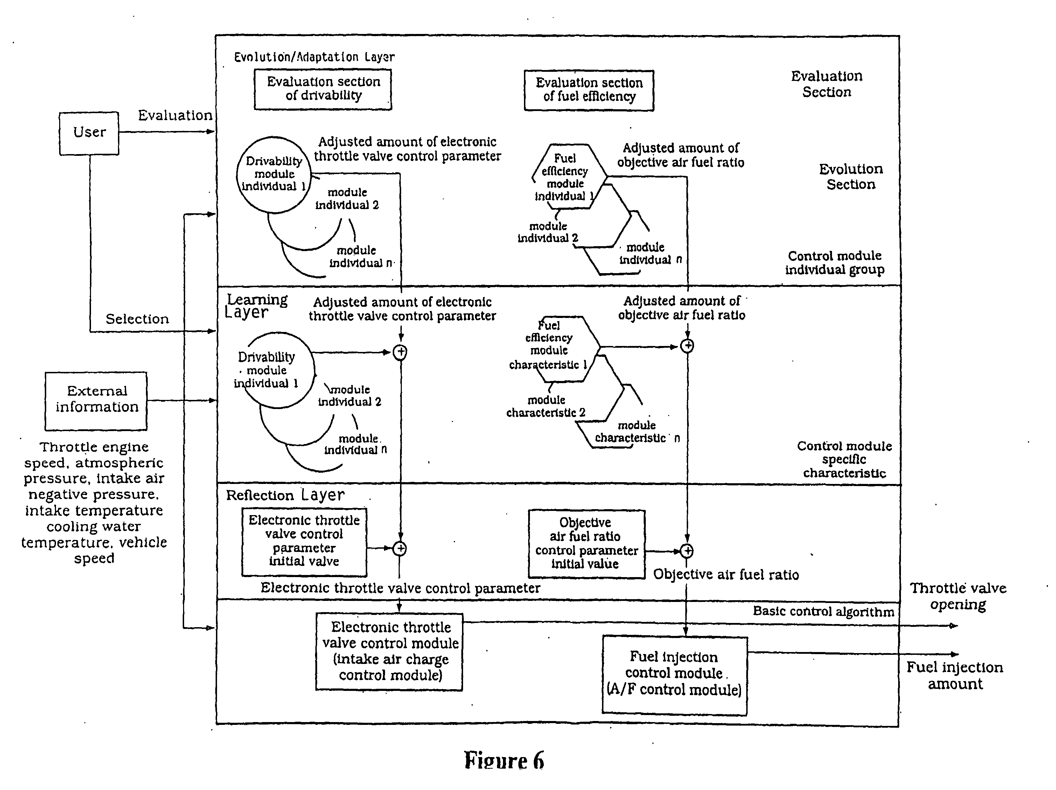

Figure 6 is a simplified block diagram of the foregoing control apparatus 10.

The control apparatus 10 is composed of the above described reflection layer, learning layer and evolution/adaptation layer.

(The Reflection Layer)

The reflection layer has an air intake control module controlling the amount of air intake and an air/ fuel ratio module controlling the air/fuel ratio.

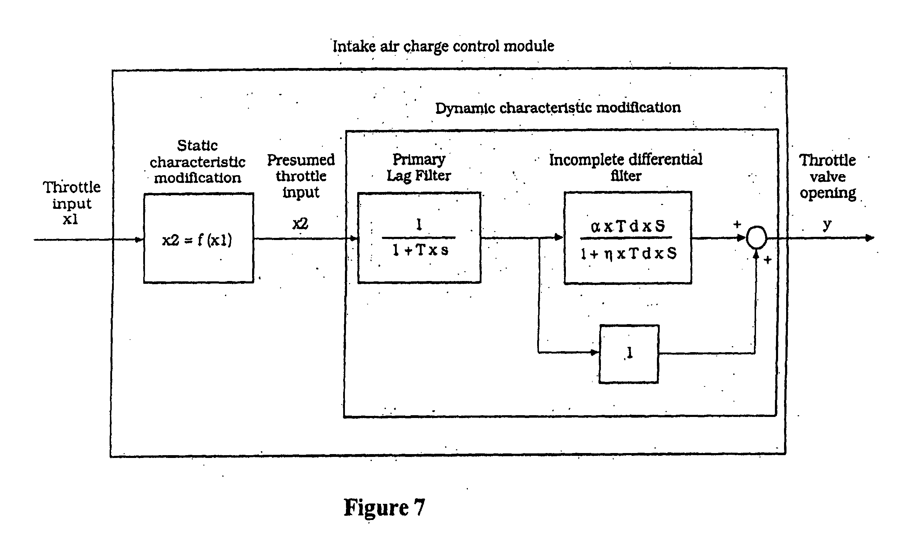

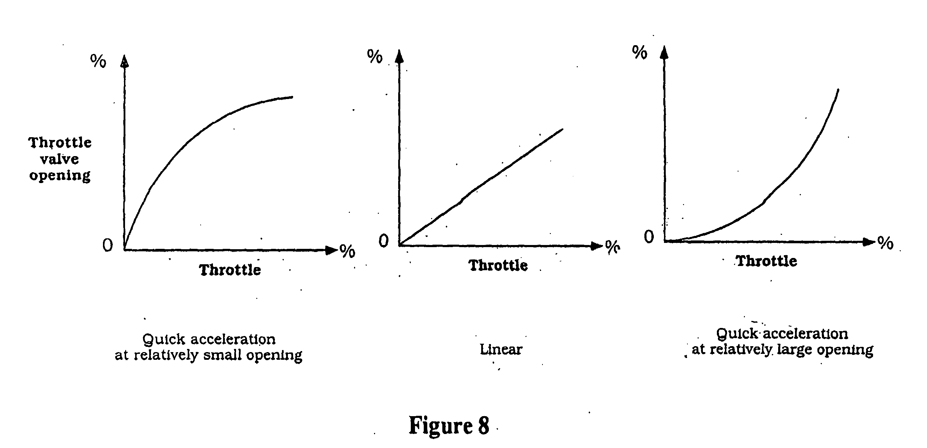

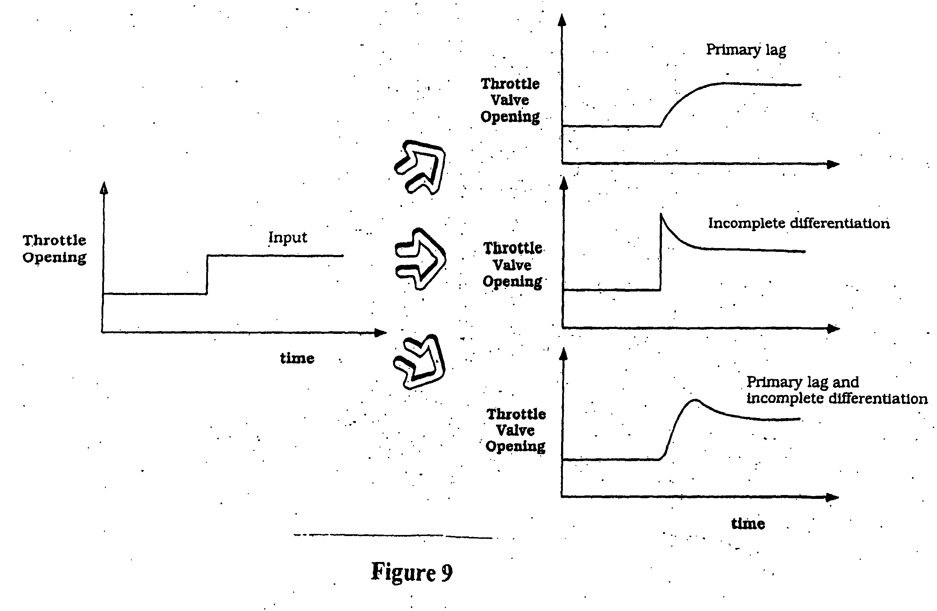

The foregoing air intake control module, as shown in Figure 7, is the module that determines the aperture for the electronic throttle valve based upon the amount of accelerator operation. For purposes of this specification, the "accelerator displacement" includes information on both the actual "accelerator angle" and the "change in the accelerator displacement." At this point, the properties of the electronic throttle valve will be briefly described. The electronic throttle valve has both static properties and dynamic properties. The former are those properties that arise from the relationship between the accelerator angle and the electronic throttle valve, and they affect the normal running characteristics of the engine. Figure 8 is a graph showing a number of the static characteristics of the throttle. By changing these static characteristics, for example, high aperture accelerator output can be realized by such measures as opening the throttle valve wide when the accelerator angle is small, gradually opening the throttle valve to full open as the accelerator displacement increases, or gradually opening, the throttle valve while the accelerator angle is small-, or, it is also possible to use a proportional control of the throttle aperture based upon the accelerator angle, or to obtain various throttle apertures for the same accelerator angle 20 settings. These static properties should be such that with increasing accelerator angle, there is a great change or no change in the throttle aperture, and various (mathematical) functions may be used to obtain the desired results. Also, with regard to the latter electronic throttle valve characteristics, to wit, the dynamic characteristics, these are those characteristics that affect the extreme operating conditions for the vehicle that are determined by the rate of change of the throttle valve with respect to the rate of change of the accelerator displacement. Specifically, as is shown in Figure 9, by combining the primary delay with the incomplete differential, it is possible to provide a low response arrangement by using slower throttle opening response to the operation of the accelerator-, a high throttle response arrangement by opening the throttle in a very sensitive response to the degree of accelerator operation, which will produce some spiking; or a medium throttle response arrangement wherein the dynamic properties are between those of the other two.

As is shown in Figure 7, the air intake control module receives inputs of the actual degree of accelerator depression and the static change unit then converts this to a static hypothetical amount of accelerator operation according to the actual accelerator displacement or operational settings, and then the dynamic change unit emits its determination of the electronic throttle aperture from the hypothetical accelerator displacement. In Figure 7, x 1 represents the input of the actual accelerator displacement, and the static conversion unit converts the actual accelerator displacement into a hypothetical one, and then the dynamic conversion unit emits the throttle valve aperture based upon the hypothetical accelerator displacement. In Figure 7, x 1 represents the actual accelerator displacement, x2 the hypothetical accelerator displacement, y the throttle valve aperture, f the static characteristics function, T the primary time delay constant, Td the time differential, a the acceleration-pedal correction coefficient, and -q the gain differential. The static functions, the primary delay constant, the acceleration-pedal correction coefficient, the time differential and the gain differential can be modified with respect to each other. This embodiment will be explained on the basis of the user making a selection from among a number of different predetermined static functions, thereby determining the dynamic gain differential, and evolving the primary time delay constant, the acceleration-pedal correction coefficient, and the time differential. In this illustration, the primary time delay, the acceleration-pedal correction coefficient and the time differential will be collectively termed "electronic throttle control parameters. "

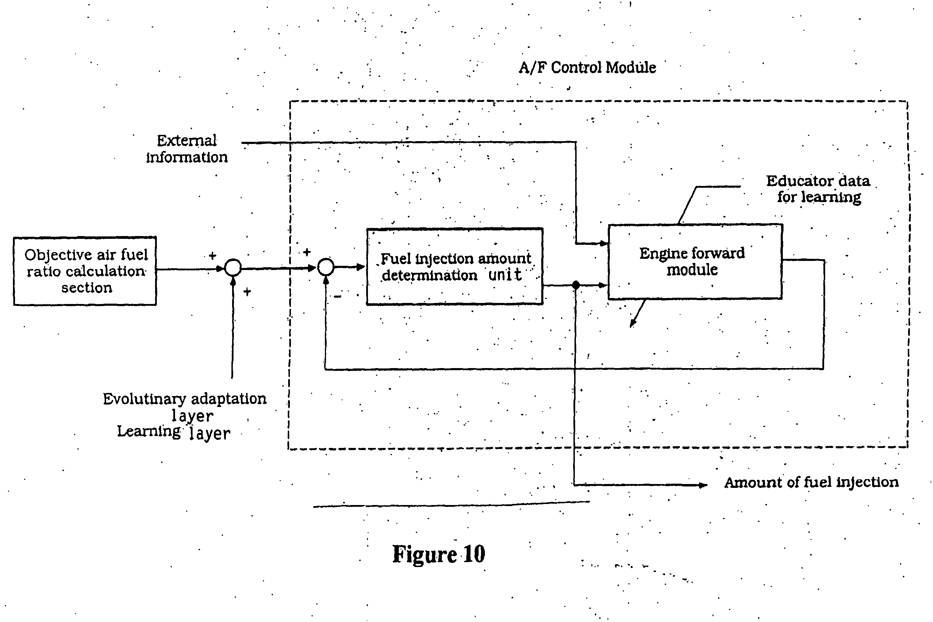

The air/fuel control module, as shown in Figure 10, consists of an engine sequence model prepared by using the control logic for the feed forward control with learning capabilities to prepare the model, whereupon an amount of injected fuel determination unit determines the amount of fuel to inject based upon the foregoing model output and the target air/fuel ratio.

The aforementioned target air/fuel ratio is the value that is computed by the target air/fuel ratio computing unit based on the engine RPM and throttle aperture, that is corrected in the evolution/adaptation layer and in the learning layer as the corrected target air/fuel ratio value.

(The Evolution/Adaptation Layer)

The evolution/adaptation layer is composed of an evaluation unit and an evolution/adaptation unit.

The evolution/adaptation unit is equipped with a first control module for the air intake control module of the reflection layer, and a second control module which relates to the air/fuel ratio control module. The evaluation units are in place for each of the various control modules so that when the evolution/adaptation units evolve under a genetic algorithm, the evaluation units respond appropriately to the user idiosyncracy or to predetermined objectives.

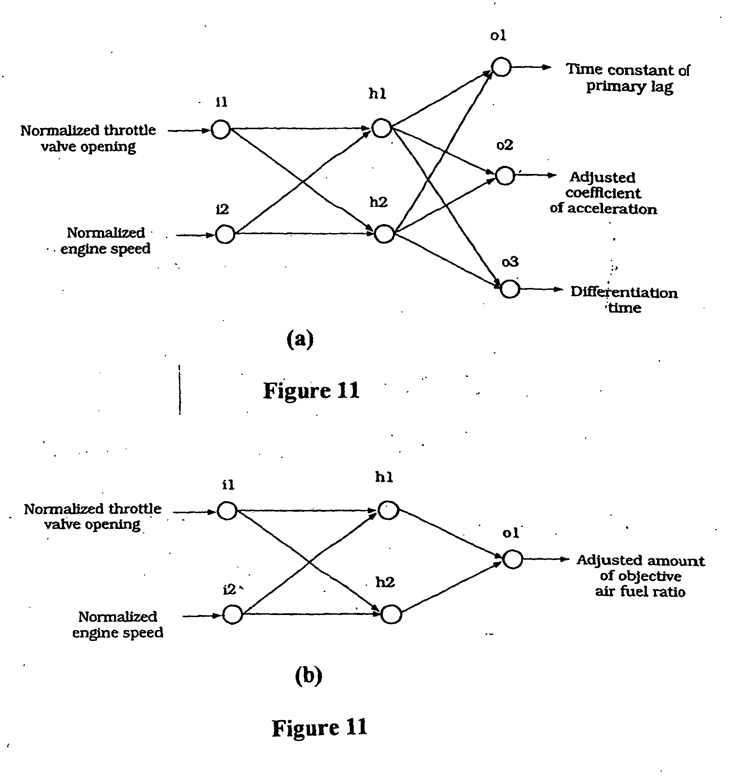

Figure 11(a) and (b) show specific examples of a first control module and second control module. As shown in the figure, the first control module is a circuit network comprising a two input, three-output type module that receives inputs of the normalized throttle aperture and normalized engine RPM data, and it then emits the corrections for the primary time delay constant for the air intake volume control module of the reflection layer, the corrected acceleration-pedal coefficient, and the time differential. The second control module is a circuit network comprising a two-input, one-output module that receives data about the normalized throttle aperture and the normalized engine R-PM and It outputs the amount of correction for the control of the air intake volume. Here, the normalized throttle aperture is the electronic throttle aperture information from the air intake volume control module that has been normalized.

If we take the Junction loads as coded genes in the neural network composed of the various control models in the evolution/adaptation layer, a number of chromosomes (individuals) are generated that are evaluated in the evaluation unit, where they underad natural selection, while those that remain are used to breed more individuals for the next generation. Then, by repeating the natural selection processes, the evaluations of the various control modules in the evolution/adaptation unit continue to evolve.

The specifics of this evolution processing will now be further explained.

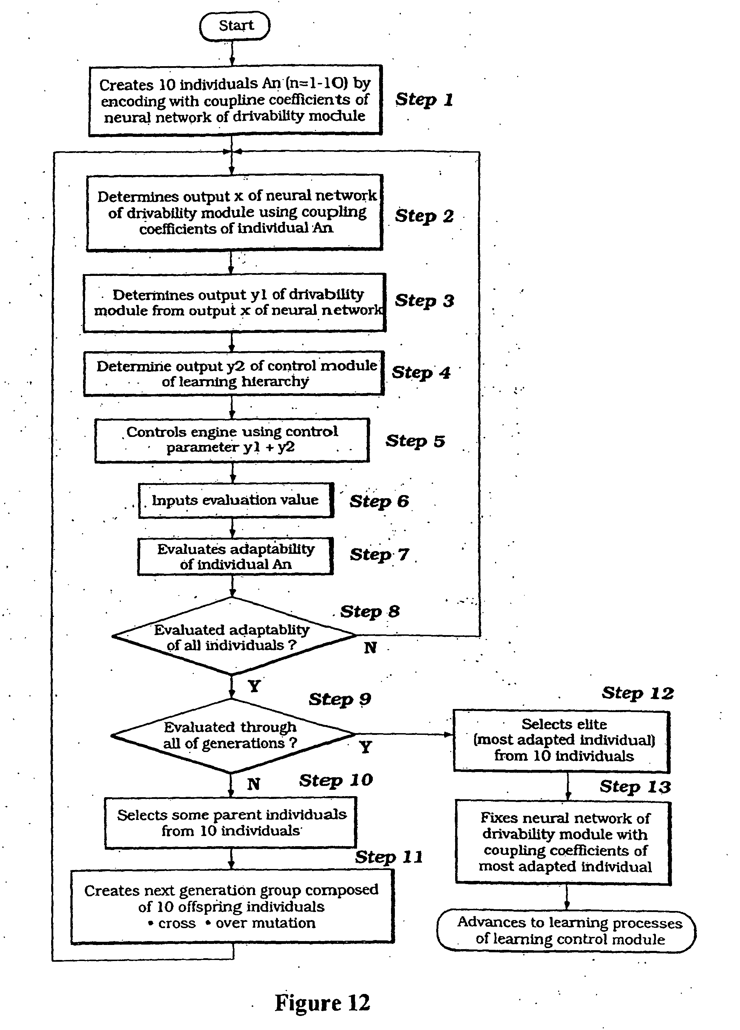

Figure 12 is a flow chart that shows the flow of the evolution processing of the first control module using the genetic algorithm.

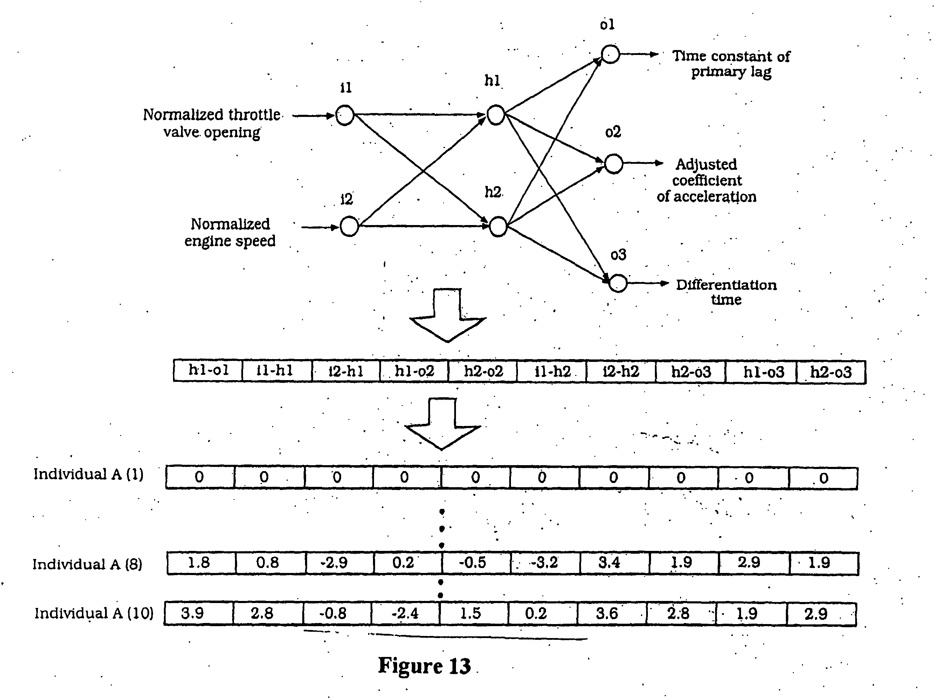

First, as shown in Figure 13, the junction coefficient for the neural circuit network that comprises the first control module is coded as a gene, which generates a plurality (n) of individuals a (in this embodiment, n = 10) which comprise the first Generation (Step 1) . Here the gene values for the various individuals (to wit, the junction coefficient values in the neural network) have an initial value that is randomly predetermined (within a range of about - 10 to 10). By canceling the output from the evolution/adaptation layer for one individual (individual a(1) in Figure 13), at this time, when learning has already been performed and the learning layer is emitting, it is also possible to maintain variety in the group of individuals during evolutionary processing without any loss of properties, even when there are restrictions on the number of individuals.

Next, one of the individuals, a(n), generated in step one, e.g. the individual a(l) junction load is fixed in the first control module of the neural network circuit, and then the output x from the neural network with respect to the input of actual information (engine RPM and throttle aperture) is determined (Step 2). Then, using Formula (1), the output undergoes linear transformation to determine first control module's output y 1 (to wit the electronic throttle valves' correction to the control parameter) with respect to individual an (1) (Step 3). The normalized values for the input information of engine RPM and throttle aperture values are used.

$$y1 = 2 \times Gx - X \qquad (1)$$

In the formula, y 1 is the output from the first control module, x is the output from the neural circuit network in the first control module, and G is the output gain from the evolution/adaptation layer. Thus, by using the output x from the neural network as a linear transformation, the output y 1 from the first control module will not become an unduly high value, and global, the evolution will proceed a little at a time so that the engine does not suffer any abrupt changes as a result of the evaluation and evolution.

After determining the output y1 from the first control module for the individual a(1), the output y2 of the learning layer is determined (Step 4). The output y1 from the first control module is then added to the output y2 from the learning layer to produce a correction Yn which, in the reflection layer, corrects the control parameter for the electronic throttle control in the reflection layer to control vehicle operation. When the user feeds an individual a(1) for evaluation (Step 6), the degree of fitness the individual a(1) is evaluated (Step 7).

The evaluation of the individual input by the user in the foregoing Step 6 can be realized when the operator pushes a button or other input device. Specifically, when driver presses such a button, the length of time that the button is pressed can be used to determine the individual evaluation value in Step 7. The computational method for calculating the evaluation method may be, for example, one which multiplies a constant coefficient by the reciprocal of the time over which the button was pressed, or the length of time the button was pressed can be used in the computation of the fuzzy rules. Thus, even If there would be some vagueness In human evaluations, it is possible to obtain an evaluation value which offers some degree of correctness. Further, should the user press the button for more than a specific period of time, at that point, the individual being evaluated could be weeded out so that it will not affect the next generation. This makes it possible for the evolution to proceed at a high rate of speed.

The above described processing in Steps 2 through 7 is performed on all the individuals generated in Step 1. Then, after evaluating the fitness of all the individuals (Step 8), a decision is made as to whether or not the specific generation number evolution processing should be carried out (Step 10). A rule-based selection process is used in this determination, and the fitness probability for each of the individuals is compared and a few parents are selected on that basis.

At this time, if generational succession is applied too strictly, there is a danger of destroying highly fit individuals. Accordingly, a combined approach having an elite preservation strategy is used. The elite (the fittest individuals) is left to unconditionally succeed to the next generation. Further, the fitness undergoes linear transformation by maintaining a constant ratio between the maximum fitness of a plurality of individuals and the average fitness.

When the selection of the parent individuals has been completed, the parent individuals are then bred to produce 10 children individuals as a second generation (Step 11). The method for the breeding among individuals may be a 1 point breeding, 2 point breeding, or breeding using a normalized distribution.

What is meant by breeding using a normalized distribution is a method under which the chromosomes (individual) that express the actual numerical values produce children which are generated according to normalized distribution in the rotational symmetry along an axis that joins the parents. The standard deviation of the normalized distribution is made proportional to the distance between parents in the axial direction of the line joining parents, and the other axial component is made proportional to the distance along a perpendicular that runs between a third parent sampled from the group and the line joining the two parents. This breeding method has the advantage of facilitating the transfer of the attributes of parent to child.

Further, at a constant probability, the 10 children individuals that were generated are randomly altered with the genes (degree of connection), which causes gene mutations. Among these 10 child individuals, there is one which can cancel the output from the above described evolution/adaptation layer.

With the above processing, after the generation of the second generation, the evolution processing then proceeds again from Step 2.

The above described evolutionary processing is repeated over a predetermined number of generations. By so doing, it is possible for the children over successive generations to be evaluated in the evaluation unit-, in other words, to be weeded out according to user preferences before generating the next generation. Accordingly, evolution can proceed on basis of the input/output function of the first control module adjusted to user preference. Step 9 determines whether or not the process has completed the predetermined number of generations, and when it encounters the final generation, the individual with the highest degree of fitness (the most fit individual) is selected from the 10 individuals in that group (elite) (Step 12). The junction coefficient of the neural network in the first control module is used to affix the genes comprising the foregoing elite individual (Step 1-3), and then learning processing, is carried out in the learning control module of the learning layer.

Next, the evolution processing by the second control module of the evolution/adaptation layer will be explained.

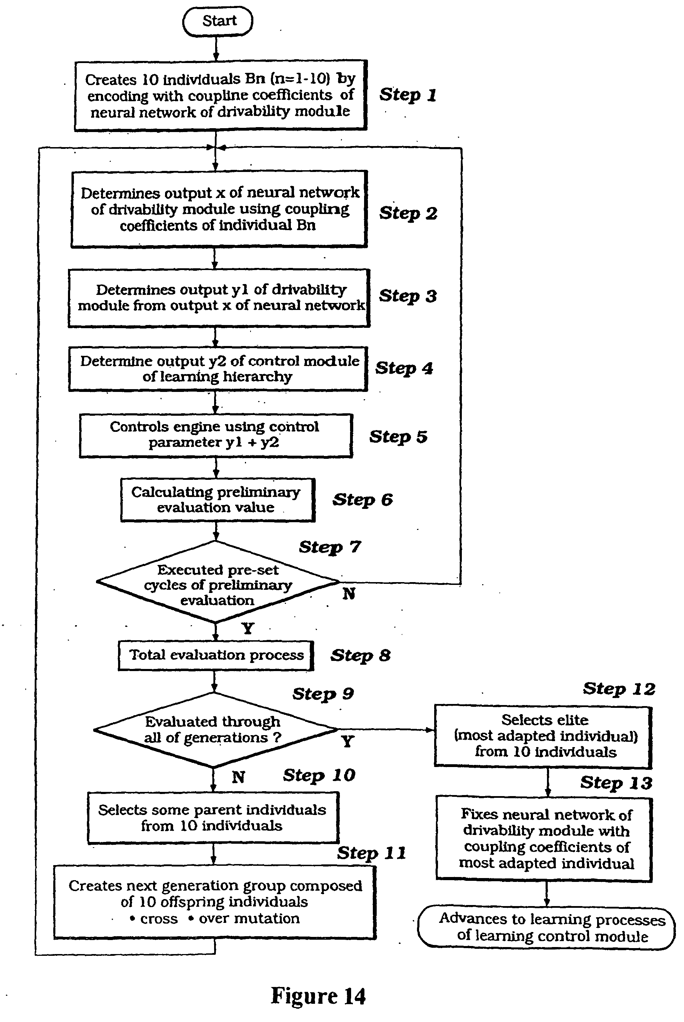

Figure 14 is a flow chart showing the evolution of the second control module according the genetic algorithm.

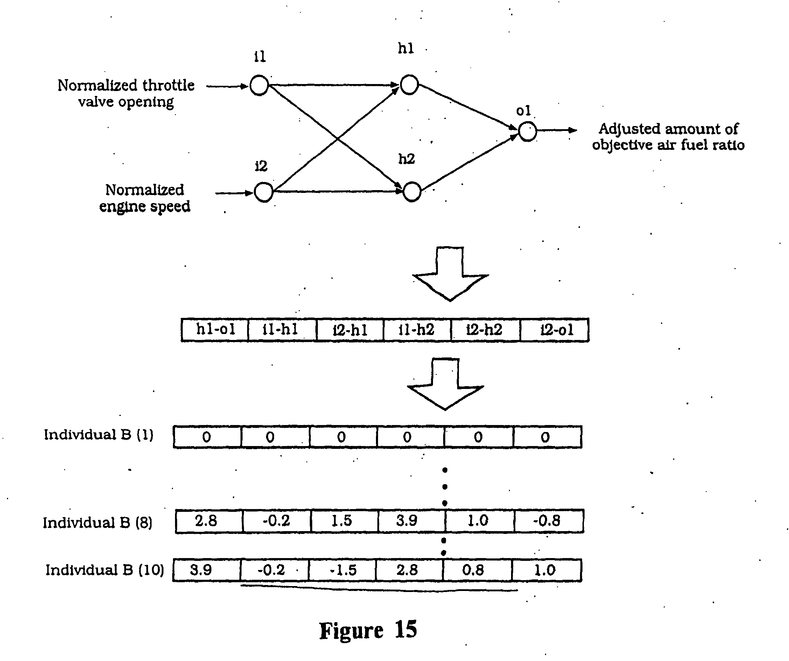

First, as shown in Figure 15, a plurality of individuals a(n) (in this embodiment n = 10) are generated as the first generation using the junction coefficient of the neural network in the second control module for gene coding (Step 1).

Next, using a similar method for the evolution processing as the above described first control module, a single individual was used for the correction Yn obtained by adding the output y1 of the second control module to the output y2 of the learning module. To wit, the correction of the target air/fuel ratio was computed in the reflection layer, and this corrected amount was added and used as the target value by the air/fuel ratio control module to perform the actual control (Step 2 through Step 5). Those results are then used to compute a preliminary evaluation 10 value (Step 6).

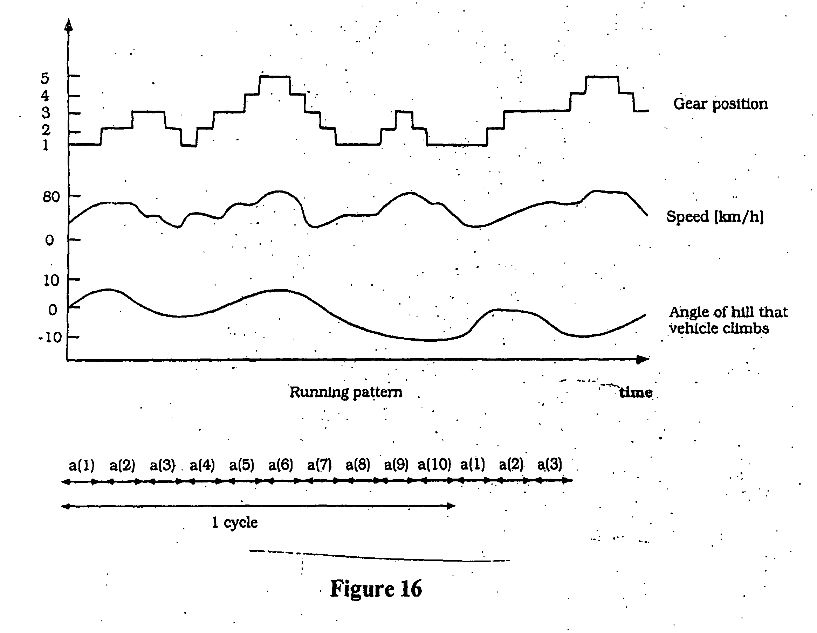

The processing of the preliminary evaluation in Step 2 through Step 6 above uses a time allotment to cycle through all the individuals for a specific number of cycles. Specifically, as shown in Figure 16, the air/fuel ratio control is carried out for one minute each with respect to all the individuals to complete one cycle, and this procedure continues over the specified number 15 of cycles.

The preliminary evaluation values for each individual in the various cycles, for example the fuel consumption, is evaluated over the time period when that individual is active.

In Step 7, a determination is made whether the preliminary evaluation processing has proceeded through the required number of cycles, and a global evaluation value is computed for each individual. The global evaluation value for each individual is used to compute the running distance during preliminary evaluation processing and the total of the preliminary evaluation value (to wit, that divided by the total fuel consumption) is computed for each individual.

Thus, by performing time division processing of the individuals in the same generation over a specific number of evaluation cycles, it is possible to make a fair evaluation of the properties of all the individuals that approximates the changes during, vehicle operation such as gear changes and the grade angle of the road.

After completion of evolution processing in the above described Steps 2-8, just as was the case for the method used by the first control module, parent individuals are selected and the next generation is produced (Steps 10 and 11). The same evolution processing is then performed on the individuals in the new generation.

The foregoing evolution processing is repeated over a predetermined number of generations. By means of this process, since the individuals in each generation are evaluated in the evaluation unit and weeded out according to their fuel consumption properties, before breeding the next generation, the evolution is such that the input/output relationship causes the fuel consumption properties to be successively improved.

When the evolution reaches the specified generation number, the elite individual is selected from the individuals of that generation (Step 12), and then the junction coefficient of the neural network circuit of the first control module is used to affix the gene of the aforementioned most fit individual (Step I')), and then the process shifts to learning processing with respect to the learning control module in the learning layer.

(Learning)

Next, the learning layer will be explained in detail.

When there is an output from the various control modules following the evolution in the evolution/adaptation layer (in the case of this embodiment, this involves the corrections to the control parameters for the electronic throttle and the correction for the target air/fuel ratio) that output is learned, and even after completion of evolution processing, the output from the evolution/adaptation layer is reflected to the reflection layer. In case the outputs from the various control modules in the evolution/adaptation layer have information that is not dependent is upon the operating state of the vehicle, in other words, when the various control modules do not receive information on the operating state, it is adequate to simply add the output values from the control modules in the evolution/adaptation layer to the outputs from the control modules of the learning layer. However, when the control modules of the evolution/adaptation layer emit information that is dependent on the operating condition of the vehicle, it is necessary to learn the operating state of the engine as well as its relationship with the output of tile control modules of the evolution/adaptation layer, and for this purpose, the learning la-layer is equipped with a learning control module and an implementing control module. In the case of the present embodiment, since both the first and second modules of the evolution/adaptation layer are composed of neural networks which receive inputs of the operating state of the engine in the form of the engine RPM, the learning layer uses an implementation control module. The learning layer, such as is shown in Figure 6, is equipped with control modules that correspond to the various control modules of the evolution/adaptation layer, and though these control modules are not shown in the figure, they are composed of two control modules. While one of the two control modules is functioning to control implementation, the other control module is used for learning, and their structure is such that these two functions can be interchanged between them. Thus, for each of the control modules to be able to perform learning, they may be composed of a circuit such as a neural network circuit, CMAC, etc. to fulfill this function.

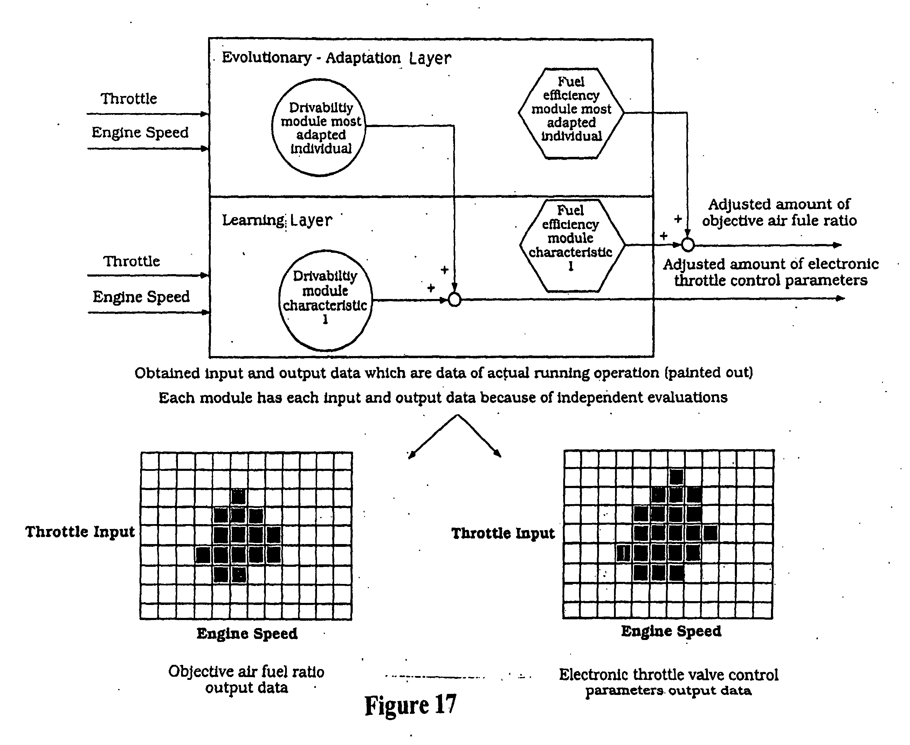

When the evolution has proceeded in the various modules of the evolution/adaptation layer to the prescribed generation number, the neural network circuits comprising those modules generate an optimal junction coefficient which is fixed in the learning layer. At that time, as shown in Figure 17, for the relationship between the input and output of the control modules in the evolution/adaptation layer by each module, the control module in the learning layer that is functioning as an implementation means captures the instruction data along with the input/output relationships in the control modules.

When the instruction data of each control module is captured, the control module for learning in the learning layer begins learning based upon the captured instruction data. Upon completion of learning, functions are switched with the implementation control module, and the output from the various control modules in the evolution/adaptation layer is either zeroed out or set with the next evolution processing output . While the control module in the learning layer is learning, the various control modules of the evolution/adaptation module have fixed the optimal junction coefficient and they continue to emit the correction data for the electronic throttle control parameter and for the correction for the target air/fuel ratio. The correction that is obtained by adding the output from the evolution/adaptation layer to that of the implementing control module of the learning layer is used to control the reflection layer. Also, the initial implementation control value in the learning layer may be set so that it is normally zero. By so doing, during the initial state, control can be applied in the reflection layer with only the output from the evolution/adaptation layer.

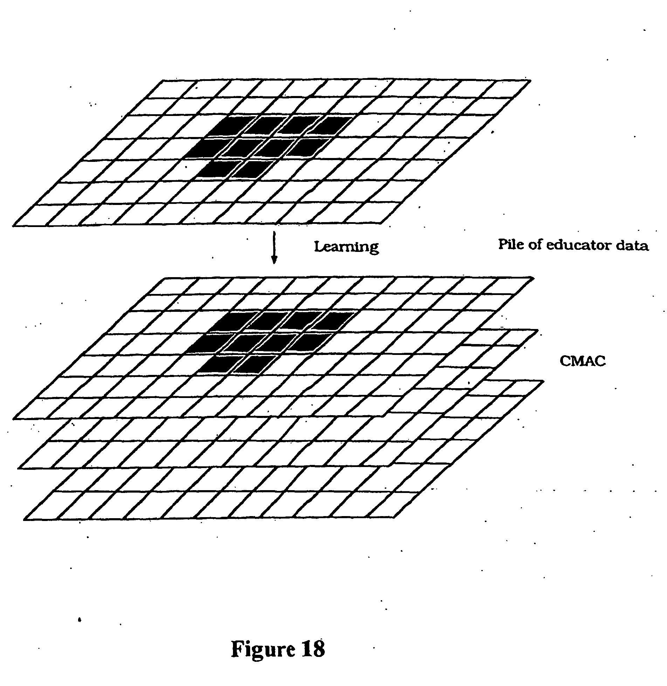

In case the control module in the foregoing learning layer is a neural network circuit, learning may be performed using conventional learning methods, but if the control module is composed of a CN/IAC, it is possible to increase the learning efficiency by learning just the newly captured instruction data as shown in Figure 18.

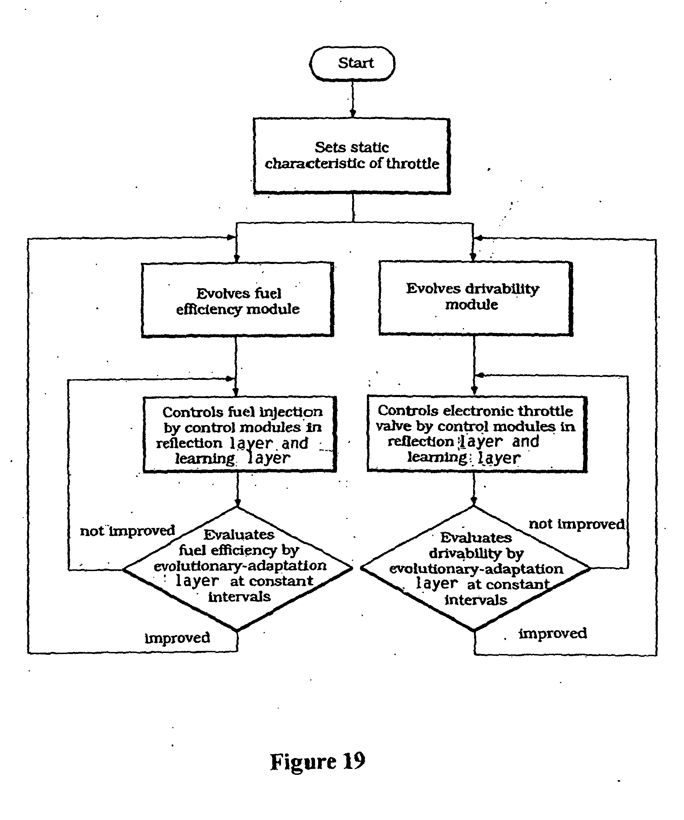

As is shown in Figure 19, evolution processing by the above described first control module and second control module as well as processing in the learning module occur in parallel.

Figure 19 is a flow chart that shows evolution processing and learning processing of the first control module being performed in parallel with evolution processing and learning processing performed in the second control module. As indicated in this flow chart, after first setting the static characteristics for the throttle, evolution processing and learning processing are performed in parallel in the first control module and second control module. Upon completion of the evolution and learning processing, control is applied using the control modules in the reflection layer and the learning layer. Also, even after the completion of the evolution processing and learning processing in each control module, evolution processing is continued in the control modules of the evolution/adaptation layer over a specific period of time, thereby improving the results by again performing evolution processing and learning those results.

Thus, by means of evolution processing and learning processing by the control modules in parallel, the evolution of one control module is not drawn in the evolutionary direction of the other control module.

When the user reads junction coefficients which were stored in an external memory and operates the learning layer based on these junction coefficients, it is possible to implement an arrangement wherein no check is performed regarding the discrepancy with the control rules in the evolution/adaptation layer, and the output from the evolution/adaptation layer is held at zero; then, upon command by the user, the evolution/adaptation layer processing can be resumed.

As described above, because the evolution and weeding out implemented by the first control module is based on the user's instruction to achieve the desired performance of the air intake volume control means, to wit, the evolution of the drivability, and because the performance of the air/fuel ratio control means, to, wit, the fuel economy performance, evolves by a weeding out procedure carried out in the second control module, the engine can achieve the drivability sought by the user as evolution proceeds comprehensively to select the control conditions that maintain optimum fuel economy. Further, because the user is able to interfere with the evolution evaluation, the user can experience the fun of influencing himself the controlled object.

Therefore, the system has at least two control modules, a so-called autonomous evolution module and a so-called interactive module.

The above description was based on an embodiment to exert global control of a vehicle wherein the user sets the static characteristics of the throttle and wherein only the dynamic characteristics of the throttle did evolve, but the invention is not limited to this embodiment. It would also be possible to use a global combination of evolution, wherein independent control modules would be established in the evolution/adaptation layer for both static properties and dynamic properties. Further, if such independent control modules were used in the evolution/adaptation layer for dynamic and static properties, their evolution processing could be conducted in parallel, or one set of properties, preferably the static properties, could be made to evolve first and be set into the control module and the evolution of the other could follow.

Further, in the embodiment that used a global control method for vehicles, the evaluation was performed, on the basis of fuel economy, by evolution in the second control model of the evolution/adaptation layer which computes the correction of the target air/fuel ratio of the air/fuel control module in the reflection layer, and on the basis of a user selected evolution in the first control module of the evolution/adaptation layer that computes the amount of control parameter correction for the electronic throttle in the air intake control module of the reflection layer, however, the invention is not restricted to these evaluation principles. Therefore, the system has at least two control modules, a so-called autonomous evolution module and a so-called interactive module. For example, fuel economy could be used as the basis for the evolution in the first control module in the evolution adaptation layer, and the user selection could be used as the basis in the second control module. Thus, evolution is implemented to obtain highly efficient control of the electronic throttle with no lean spikes appearing in the control module for the air intake volume. Further, since the user preferred air/fuel ratio may be used in the air/fuel ratio control module, should the user emphasize drivability, then the air/fuel ratio can be controlled to produce more power.

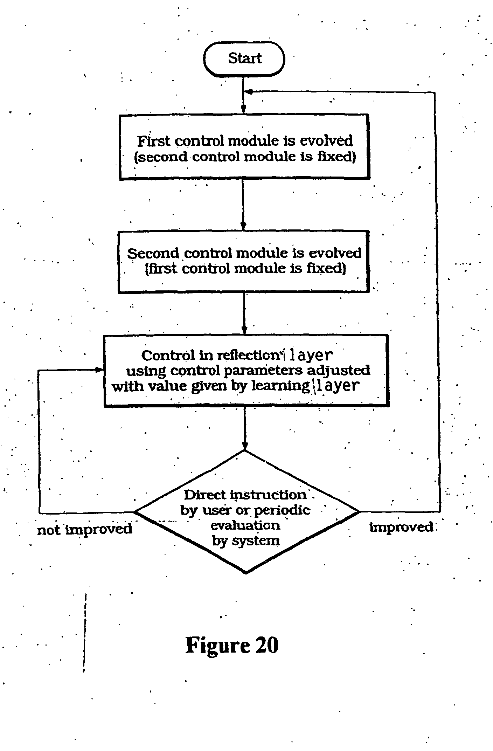

Further, in this embodiment of a global control method for vehicles, the evolution processing of the first and second control modules in the evolution/adaptation layer was performed in parallel, but the invention is not confined to using that method. For example, it may be performed in series as shown in Figure 20. In this case, while one of the control modules was carrying out evolution processing and learning processing, the other would not -- the junction coefficient would remain in place in that control module, and the evolution and learning processing would then alternate between modules. By fixing, the junction coefficient in the other control module while one control module is implementing evolution and learning processing, it is possible to have the evolution processing results by the two modules being reflected mutually to advance evolution based upon this coordination between the two modules.

It is further possible to include only the control module for user directions in the evolution layer to carry out evolution processing. This arrangement more heavily favors user preferences, and allows the evolution to proceed quicker.

Further still, the control modules in the reflection layer in this embodiment of a global control method for vehicles was divided between an air intake volume control module and an air/fuel ratio control module, and corresponding modules were used in the learning layer and the evolution/adaptation layer. However, there is no need to separate the control modules. For example, in engines where the length of the air intake can be controlled, an air intake length control module can be added without requiring changes in the existing, control modules.

Further, the criteria for evolution in the evolution/adaptation layer in this embodiment of a global control method for vehicles were user-preferences and fuel economy, but the invention is not limited to these criteria; any desired criteria may be used to set the type and direction for the control modules in the reflection layer.

Even further, the evolution processing by the various control modules was halted after a specific number of generations in the present embodiment of a global control method for vehicles, but the invention is not so limited, the control modules could also continue to evolve until convergence was reached.

As described above, the embodiment was described in terms of a Cylobal control method for vehicles, but the controlled object is not confined to vehicles, the invention may be used to control other controlled objects.

As described above, this invention provides a method of global control of the characteristics of the final controlled object by controlling a plurality of related controlled objects, wherein the global control method is characterized by each controlled object being controlled by a control module, the control parameters for the input and output of each module being developed by evolving a genetic algorithm which at least follows the predetermined target characteristics of the final controlled object, the user characteristics for the controlled object, and/or the conditions under which the controlled object is operating, thereby allowing setting optimal control parameters in a short period of time, and even in cases when the final controlled object has non linear characteristics, the method does not require experimental data that can only be obtained through large expenditures of time and effort.

Because, while one control module is performing evolutionary processing, other control module(s) are putting control parameters in place, it is possible to limit the extent of the directionality in the evolution of the control modules, thereby enabling the optimal control parameter values to be obtained in a short period of time.

Also, when evolutionary processing is performed in a plurality of control modules and takes place in parallel, there are no restrictions upon the direction of evolution in the control modules, and this feature broadens the diversity of the evolution.

Further still, when evolutionary processing for each module is performed until the evolutions for the control modules converge, control can be exercised at that point using a control parameter at its optimal value.

Additionally, when evolutionary processing for each module is performed over a predetermined number of generations, it is possible to keep lower the time needed for evolution processing each module, and accordingly, to shorten the global evolution processing time so that the results of the completed evolution processing can be reflected in the final controlled object within a very short time.

Also, when the final controlled object is an engine, and when the control parameters to control the air intake volume control means with respect to the amount of accelerator operation are evolved using a genetic algorithm, the lean spikes in the exhaust air/fuel ratio can be reduced while improving fuel economy and exhaust emissions. Further the driving properties can be changed according to driver taste, and then the time required for developing the control parameter can be reduced, as can the costs involved in the control method.

Further, varying the static properties of the air intake volume control means with respect to the amount of accelerator operation has the effect of changing the driving characteristics while the vehicle is operating normally. Also, by changing the dynamic characteristics of the air intake volume control means with respect to the amount of accelerator operation, it is possible to change the driving characteristics of the engine during extreme operations.

**Claims**

1. A method of global control of the characteristics of a final controlled object by controlling a plurality of related controlled objects, whereby each related controlled object is controlled by at least one corresponding control module, wherein the control parameters for each of the corresponding control modules are influenced by a corresponding evolutionary algorithm, such as a generic algorithm, and whereby each corresponding evolutionary algorithm responds at least either to the predetermined target characteristics of the final controlled object, or to the conditions under which its corresponding related controlled object is operating.

2. Method according to claim 1, **characterized in that** said control parameters are in addition influenced by the user characteristics for the controlled object, and/or the conditions under which the corresponding related controlled object is operating.

3. Method according to claim 1 or 2, **characterized in that** each related controlled object is controlled by at least two corresponding control modules, the first one being an autonomous evolution control module and the second being an interactive evolution control module.

4. Method according to at least one of the preceding claims 1 to 3, **characterized in that** said method is composed of two layers or three layers, such as a reflection layer, a leaming layer and an evolution/adaptation layer.

5. Method according to claim 4, **characterized in that** said reflection layer receives information inputs about the extemal world, as operational conditions or as an operational environment of the related controlled objects, and **in that** said reflection layer contains a plurality of control modules which determine the extent of operation of various means controlling the plurality of the corresponding related controlled objects, which are related to said final controlled object.

6. Method according to claim 4 or 5, **characterized in that** said learning layer, which learns the evoluted results of various control modules of said evolution/adaptation layer is equipped with the same number of control modules as said evolution/adaptation layer and is capable of memorizing past evolutionary results from the learning layer.

7. Method according to claim 6, **characterized in that** said past evolutionary results are user-selectable.

8. Method according to at least one of the preceding claims 4 to 7, **characterized in that** said evolution/adaptation layer is composed of an evaluation unit and an evolution/adaption unit.

9. Method according to at least one of the preceding claims 1 to 8, **characterized in that** while one control module is implementing evolutionary processing, at least one other control module is fixing control parameters.

10. Method according to at least one of the preceding claims 1 to 9, **characterized in that** the evolutionary processing implemented in a plurality of control modules takes place in parallel.

11. Method according to claim 9 or 10, **characterized in that** evolutionary processing for each control module is performed until there is convergence of the evolution for the control modules.

12. Method according to claim 9 or 10, **characterized in that** evolutionary processing for each control module is performed over a predetermined number of generations.

13. Method according to at least one of the preceding claims 2 to 12, **characterized in that** the user characteristics include at least one of the characteristics of the user's preferences, skill and condition.

14. Method according to claim 13, **characterized in that** the user's preferences are determined by the length of time that he operates an appropriate input apparatus.

15. Method according to at least one of the preceding claims 2 to 14, **characterized in that** the operational condition for the related controlled object utilizes the changes over time of the corresponding related controlled object and/or its frequency of usage.

16. Method according to at least one of the preceding claims 2 to 15, **characterized in that** the final controlled object is an engine (1), and at least one of a plurality of related controlled objects to control the properties of said engine (1) is the air intake volume, and the corresponding control module controlling the air intake volume implements at least one input of an accelerator displacement, while it then emits a signal of operational displacement for the air intake volume control means.

17. Method according to claim 16, **characterized in that** the control parameters for the control module controlling the air intake volume includes a parameter for the static effects that the amount of accelerator operation have on the air intake volume control means.

18. Method according to claim 16 or 17, **characterized in that** the control parameters for the control module controlling the air intake volume includes a parameter for the dynamic effect of the accelerator displacement upon the air intake volume control means.

19. Method according to claim 18, **characterized in that** the control parameter affecting the dynamic characteristics include at least one of a primary delay time constant with respect to the amount of operation of the accelerator, an acceleration-pedal correction constant, the time differential, and the differential gain.

20. Method according to at least one of the preceding claims 1 to 19, **characterized in that** the final controlled object is an engine (1) and at least one of the plurality of the related controlled objects for controlling the characteristics of said engine (1) is the amount of fuel injection, and the corresponding control module controlling the amount of fuel injection receives data inputs of at least the operating state of the engine (1), and emits the amount of operation of the fuel injection device.

21. Method according to claim 20, **characterized in that** the control parameters for the corresponding control module controlling the amount of fuel injection includes the target air/fuel ratio.

**Patentansprüche**

1. Verfahren der globalen Steuerung der Merkmale eines final- gesteuerten Objektes durch Steuern einer Mehrzahl von zugehörig gesteuerten Zielen, wodurch jedes zugehörig gesteuertes Objekt gesteuert wird durch zumindest ein entsprechendes Steuermodul, wobei die Steuerparameter für jedes der entsprechenden Steuermodule durch einen entsprechenden evolutionären Algorithmus beeinflusst wird, wie z. B. ein generischer Algorithmus, und wobei jeder zugehörige evolutionärer Algorithmus zumindest entweder auf die vorbestimmten Ziel- Merkmale des final- gesteuerten Objektes, oder auf die Bedingungen antwortet, unter denen sein entsprechend zugehöriges gesteuertes Objekt arbeitet.

2. Verfahren nach Anspruch 1, **dadurch gekennzeichnet, dass** die Steuerparameter zusätzlich durch die Merkmale des Benutzers für das gesteuerte Objekt beeinflusst werden, und / oder die Bedingungen, unter denen das entsprechende zugehörige gesteuerte Objekt arbeit.

3. Verfahren nach Anspruch 1 oder 2, **dadurch gekennzeichnet, dass** jedes zugehörige gesteuerte Objekt durch zumindest zwei entsprechende Steuermodule gesteuert wird, wobei das erste Steuermodul ein autonomes evolutionäres Steuermodul und das zweite Steuermodul ein interaktives evolutionäres Steuermodul ist.

4. Verfahren nach zumindest einem der vorhergehenden Ansprüche 1 bis 3; **dadurch gekennzeichnet, dass** das Verfahren aus zwei Schichten oder drei Schichten zusammengesetzt ist, wie z. B. einer Reflexionsschicht, einer Lernschicht und einer Evolutions- / Adoptions- Schicht.

5. Verfahren nach Anspruch 4, **dadurch gekennzeichnet, dass** die Reflexionsschicht Informationseingaben über die Außenwelt als Betriebsbedingungen oder als eine Betriebsumgebung des zugehörig gesteuerten Objektes empfängt, und dadurch, dass die Reflexionsschicht eine Mehrzahl von Steuermodulen enthält, die das Ausmaß des Betriebes der verschiedenen Einrichtungen bestimmen, die die Mehrzahl der entsprechenden zugehörig gesteuerten Objekte, die dem finalgesteuerten Objekt zugehörig sind, steuern.

**6.** Verfahren nach Anspruch 4 oder 5, **dadurch gekennzeichnet, dass** die Lernschicht, die die evolutionären Ergebnisse der verschiedenen Steuermodule der Entwicklungs- / Adaptions- Schicht lernt, mit derselben Anzahl von Steuermodulen wie die Entwicklungs- / Adaptions- Schicht ausgerüstet ist und in der Lage ist, vergangene evolutionäre Ergebnisse von der Lernschicht zu speichern.

**7.** Verfahren nach Anspruch 6, **dadurch gekennzeichnet, dass** die vergangenen evolutionären Ergebnisse Benutzer- auswählbar sind.

**8.** Verfahren nach zumindest einem der vorhergehenden Ansprüche 4 bis 7, **dadurch gekennzeichnet, dass** die Entwicklungs- / Adaptions- Schicht aus einer Evolutionseinheit und einer Entwicklungs- / Adaptions- Einheit besteht.

**9.** Verfahren nach zumindest einem der vorhergehenden Ansprüche 1 bis 8, **dadurch gekennzeichnet, dass** während ein Steuermodus die evolutionäre Verarbeitung implementiert, zumindest ein weiteres Steuermodul Steuerparameter festlegt.

**10.** Verfahren nach zumindest einem der vorhergehenden Ansprüche 1 bis 9, **dadurch gekennzeichnet, dass** die evolutionäre Verarbeitung, implementiert in einer Mehrzahl von Steuermodulen, parallel stattfindet.

**11.** Verfahren nach Anspruch 9 oder 10, **dadurch gekennzeichnet, dass** die evolutionäre Verarbeitung für jedes Steuermodul ausgeführt wird, bis es eine Konvergenz der Evolution für die Steuermodi gibt.

**12.** Verfahren nach Anspruch 9 oder 10, **dadurch gekennzeichnet, dass** die evolutionäre Verarbeitung für jedes Steuermodul über eine vorbestimmte Anzahl von Generationen ausgeführt wird.

**13.** Verfahren nach zumindest einem der vorhergehenden Ansprüche 2 bis 12, **dadurch gekennzeichnet, dass** die Benutzermerkmale zumindest eines der Merkmale der Vorlieben des Benutzers, Fachkenntnisse und Zustand enthalten.

**14.** Verfahren nach Anspruch 13, **dadurch gekennzeichnet, dass** die Vorlieben des Benutzers durch die Zeitdauer bestimmt werden, die er an einer geeigneten Eingabevorrichtung arbeitet.

**15.** Verfahren nach zumindest einem der vorhergehenden Ansprüche 2 bis 14, **dadurch gekennzeichnet, dass** die Betriebsbedingung für das zugehörige, gesteuerte Objekt die Veränderungen über die Zeit des entsprechend zugehörigen gesteuerten Zieles und / oder seine Benutzungshäufigkeit verwendet.

**16.** Verfahren nach zumindest einem der vorhergehenden Ansprüche 2 bis 15, **dadurch gekennzeichnet, dass** das final- gesteuerte Objekt ein Motor (1) ist, und zumindest eines einer Mehrzahl von zugehörig gesteuerten Objekten, um die Eigenschaften des Motors (1) zu steuern, das Lufteinlassvolumen ist, und das entsprechende Steuermodul, das das Lufteinlassvolumen steuert, zumindest einen Eingang einer Beschleunigerverlagerung implementiert, während es dann ein Signal der betrieblichen Verlagerung an die Luft- Einlassvolumen - Steuereinrichtung emittiert.

**17.** Verfahren nach Anspruch 16, **dadurch gekennzeichnet, dass** die Steuerparameter für das Steuermodul, das das Lufteinlassvolumen steuert, einen Parameter für die statische Wirkung enthalten, die der Betrag der Beschleunigerbetätigung auf die Lufteinlassvolumen- Steuereinrichtung ausübt.

**18.** Verfahren nach Anspruch 16 oder 17, **dadurch gekennzeichnet, dass** die Steuerparameter für das Steuermodul, das das Lufteinlassvolumen steuert, einen Parameter für die dynamische Wirkung der Beschleunigerverlagerung auf die Einlassvolumen- Steuereinrichtung enthält.

**19.** Verfahren nach Anspruch 18, **dadurch gekennzeichnet, dass** die Steuerparameter, die die dynamischen Merkmale beeinträchtigen, zumindest entweder eine Primär- Zeitverzögerungskonstante in Bezug auf den Betätigungsbetrag des Beschleunigers, eine Beschleunigerpedal- Korrekturkonstante, das Zeitdifferential oder der Differentialgewinn ist.

**20.** Verfahren nach zumindest einem der vorhergehenden Ansprüche 1 bis 19, **dadurch gekennzeichnet, dass** das final gesteuerte Objekt ein Motor (1) ist und zumindest eines der Mehrzahl der zugehörigen gesteuerten Objekte zum Steuern der Charakteristika des Motors (1), die Kraftstoffeinspritzmenge ist, und das entsprechende Steuermodul, das die Kraftstoffeinspritzmenge steuert, Dateneingaben von zumindest dem Betriebszustand des Motors (1) empfängt, und den Betätigungsbetrag der Kraftstoffeinspritzvorrichtung emittiert.

**21.** Verfahren nach Anspruch 20, **dadurch gekennzeichnet, dass** die Steuerparameter für das entsprechende Steuermodul, das die Kraftstoffeinspritzmenge steuert, das Ziel- Luft- / Kraftstoffverhältnis enthält.

**Revendications**

1. Procédé de commande globale des caractéristiques d'un objet commandé final en commandant une pluralité d'objets commandés associés, grâce auquel chaque objet commandé associé est commandé par au moins un module de commande correspondant, dans lequel les paramètres de commande pour chacun des modules de commande correspondants sont influencés par un algorithme évolutif correspondant, par exemple un algorithme générique, et grâce auquel chaque algorithme évolutif correspondant réagit au moins, soit aux caractéristiques cibles prédéterminées de l'objet commandé final, soit aux conditions dans lesquelles fonctionne son objet commandé associé correspondant.

2. Procédé selon la revendication 1, **caractérisé en ce que** lesdits paramètres de commande sont, en outre, influencés par les caractéristiques d'utilisateur pour l'objet commandé, et/ou les conditions dans lesquelles fonctionne l'objet commandé associé correspondant.

3. Procédé selon la revendication 1 ou 2, **caractérisé en ce que** chaque objet commandé associé est commandé par au moins deux modules de commande correspondants, le premier étant un module de commande à évolution autonome et le second étant un module de commande à évolution interactive.

4. Procédé selon au moins l'une des revendications précédentes 1 à 3, **caractérisé en ce que** ledit procédé se compose de deux couches ou de trois couches, telles qu'une couche de réflexion, une couche d'apprentissage et une couche d'évolution/d'adaptation.

5. Procédé selon la revendication 4, **caractérisé en ce que** ladite couche de réflexion reçoit des entrées d'informations concernant le monde extérieur, par exemple des conditions opératoires ou un environnement opératoire des objets commandés associés, et **en ce que** ladite couche de réflexion contient une pluralité de modules de commande qui déterminent le rayon d'action de divers moyens commandant la pluralité des objets commandés associés correspondants, qui sont associés audit objet commandé final.

6. Procédé selon la revendication 4 ou 5, caractérisé en ce que ladite couche d'apprentissage, qui apprend les résultats évolués des divers modules de commande de ladite couche d'évolution/d'adaptation est pourvue du même nombre de modules de commande que ladite couche d'évolution/d'adaptation, et est apte à mémoriser des résultats évolutifs passés issus de la couche d'apprentissage.

7. Procédé selon la revendication 6, **caractérisé en ce que** lesdits résultats évolutifs passés peuvent être sélectionnés par l'utilisateur.

8. Procédé selon au moins l'une des revendications précédentes 4 à 7, **caractérisé en ce que** ladite couche d'évolution/d'adaptation se compose d'une unité d'évaluation et d'une unité d'évolution/d'adaptation.

9. Procédé selon au moins l'une des revendications précédentes 1 à 8, **caractérisé en ce que**, alors qu'un module de commande met en oeuvre un traitement évolutif, au moins un autre module de commande fixe des paramètres de commande.

10. Procédé selon au moins l'une des revendications précédentes 1 à 9, **caractérisé en ce que** le traitement évolutif mis en oeuvre dans une pluralité de modules de commandes se déroule en parallèle.

11. Procédé selon la revendication 9 ou 10, **caractérisé en ce que** le traitement évolutif pour chaque module de commande s'effectue jusqu'à se produise une convergence de l'évolution des modules de commande.

12. Procédé selon la revendication 9 ou 10, **caractérisé en ce que** le traitement évolutif pour chaque module de commande s'effectue sur un nombre prédéterminé de générations.

13. Procédé selon au moins l'une des revendications précédentes 2 à 12, **caractérisé en ce que** les caractéristiques d'utilisateur incluent au moins l'une des caractéristiques des préférences, de la qualification et de la condition de l'utilisateur.

14. Procédé selon la revendication 13, **caractérisé en ce que** les préférences de l'utilisateur sont déterminées par la durée pendant laquelle il actionne un dispositif d'entrée approprié.

15. Procédé selon au moins l'une des revendications précédentes 2 à 14, **caractérisé en ce que** la condition opératoire pour l'objet commandé associé utilise les changements au cours du temps de l'objet commandé associé correspondant et/ou de sa fréquence d'emploi.

16. Procédé selon au moins l'une des revendications précédentes 2 à 15, **caractérisé en ce que** l'objet commandé final est un moteur (1), et au moins une pluralité d'objets commandés associés pour commander les propriétés dudit moteur (1) est le volume d'admission d'air, et le module de commande correspondant commandant le volume d'admission d'air met en oeuvre au moins une entrée d'un déplacement d'accélérateur, tandis qu'il émet ensuite un signal d'un déplacement opératoire pour les moyens de commande de volume d'admission d'air.

**17.** Procédé selon la revendication 16, **caractérisé en ce que** les paramètres de commande pour le module de commande commandant le volume d'admission d'air incluent un paramètre pour les effets statiques qu'exerce l'ampleur de l'action de l'accélérateur sur les moyens de commande de volume d'admission d'air.

**18.** Procédé selon la revendication 16 ou 17, **caractérisé en ce que** les paramètres de commande pour le module de commande commandant le volume d'admission d'air incluent un paramètre pour l'effet dynamique du déplacement de l'accélérateur sur les moyens de commande de volume d'admission d'air.

**19.** Procédé selon la revendication 18, **caractérisé en ce que** les paramètres de commande affectant les caractéristiques dynamiques incluent au moins l'un d'une durée de retard principale constante par rapport à l'ampleur de l'action de l'accélérateur, d'une constante de correction de pédale d'accélération, du différentiel temporel et du gain différentiel.

**20.** Procédé selon au moins l'une des revendications précédentes 1 à 19, **caractérisé en ce que** l'objet commandé final est un moteur (1), et au moins l'un de la pluralité d'objets commandés associés pour commander les propriétés dudit moteur (1) est la quantité de carburant à injecter, et le module de commande correspondant commandant la quantité de carburant à injecter reçoit des entrées de données d'au moins l'état opératoire du moteur (1), et émet l'ampleur de l'action du dispositif d'injection de carburant.

**21.** Procédé selon la revendication 20, **caractérisé en ce que** les paramètres de commande pour le module de commande commandant la quantité de carburant à injecter inclut le rapport air/carburant cible.

Evolution/Adaptation Layer

Evaluation section of control module 1 | Evaluation section of control module 2 | Evaluation section of control module k

Evaluation Unit

User

Evaluation

Control parameter group 1 adjusted amount
Control parameter group 2 adjusted amount
Control parameter group k adjusted amount

Control module 1 individual 1
Control module 1 individual 2
Control module 1 individual n

Control module 2 individual 1
Control module 2 individual 2
Control module 2 individual n

Control module k individual 1
Control module k individual 2
Control module k individual n

Evolution Unit

Control module individual group

Learning Layer

Selection

External information

Control parameter group 1 adjusted amount
Control parameter group 2 adjusted amount
Control parameter group k adjusted amount

Control module 1 characteristic 1
Control module 1 characteristic 2
Control module 1 characteristic n

Control module 2 characteristic 1
Control module 2 characteristic 2
Control module 2 characteristic n

Control module k characteristic 1
Control module k characteristic 2
Control module k characteristic n

Control module specific characteristic

Reflection Layer

Control parameter group 1 initial value | Control parameter group 2 initial value | Control parameter group k initial value

Control parameter group 1 | Control parameter group 2 | Control parameter group k output

Control module 1
Control module 2
Control module k

output
output
output

final controlled subject

**Figure 1**

Start

First control module is evolved

First control by control modules in reflection layer and learning layer

Operates evolutionary-adaptation layer at constant intervals and evaluates performance of first control module

Not improved

Improved

Second control module is evolved

Second control by control modules in reflection layer and learning layer

Operates evolutionary-adaptation layer at constant intervals and evaluates performance of second control module

Not improved

Improved

k control module is evolved

k control by control modules in reflection layer and learning layer

Operates evolutionary-adaptation layer at constant intervals and evaluates performance of k control module

Not improved

Improved

Figure 2

```
                      ┌─────────┐
                      │  Start  │
                      └─────────┘
                           │
                           ▼
        ┌──────────────────────────────────┐
        │      First control module        │
        │          is evolved.             │
        │       The other control          │
        │       modules are fixed.         │
        └──────────────────────────────────┘
                           │
                           ▼
   NO                  ╱─────────╲
  ◄────────────────── ╱ Through all╲
                      ╲ of generations╱
                       ╲─────────╱
                           │ YES
                           ▼
        ┌──────────────────────────────────┐
        │      Second control module       │
        │          is evolved.             │
        │       The other control          │
        │       modules are fixed.         │
        └──────────────────────────────────┘
                           │
                           ▼
   NO                  ╱─────────╲
  ◄────────────────── ╱ Through all╲
                      ╲ of generations╱
                       ╲─────────╱
                           │ YES
                           ▼
        ┌──────────────────────────────────┐
        │      k  control module           │
        │          is evolved.             │
        │       The other control          │
        │       modules are fixed.         │
        └──────────────────────────────────┘
                           │
                           ▼
   NO                  ╱─────────╲
  ◄────────────────── ╱ Through all╲
                      ╲ of generations╱
                       ╲─────────╱
                           │ YES
                           ▼
        ┌──────────────────────────────────┐
        │    Control by control modules    │
        │    in reflection layer and       │
        │       learning layer.            │
        └──────────────────────────────────┘
                           │
                           ▼
                       ╱─────────╲
                      ╱   Direct   ╲
                     ╱  instruction ╲
                     ╲ by user or periodic ╱
                      ╲ evaluation by ╱
                       ╲  system  ╱
                           │
                    Evolution continues
```

**Figure 3**

```
                              ( Start )
                                  │
        ┌─────────────────────────┼──────────────────────────────┐
        │                         ▼                               │
        │              ┌─────────────────────┐                    │
        │              │  First control module│                   │
        │              │     is evolved.      │                   │
        │              │   The other control  │                   │
        │              │  modules are fixed.  │                   │
        │              └─────────────────────┘                    │
        │                         │                               │
        │                         ▼                               │
        │    NO              ◇ Determination ◇                    │
        │ ◄──────────────────  of evolution as to                 │
        │                      first control                      │
        │                         module ◇                        │
        │                         │ YES                           │
        │                         ▼                               │
        │              ┌─────────────────────┐                    │
        │              │ Second control module│                   │
        │              │     is evolved.      │                   │
        │   ┌──────────►   The other control  │                   │
        │   │          │  modules are fixed.  │                   │
        │   │          └─────────────────────┘                    │
        │   │                     │                               │
        │   │ NO                  ▼                               │
        │   └────────────── ◇ Determination ◇                    │
        │                      of evolution as to                 │
        │                      second control                     │
        │                         module ◇                        │
        │                         │ YES                           │
        │                         ▼                               │
        │              ┌─────────────────────┐                    │
        │              │  ·k  control module  │                   │
        │              │     is evolved.      │                   │
        │   ┌──────────►   The other control  │                   │
        │   │          │  modules are fixed.  │                   │
        │   │          └─────────────────────┘                    │
        │   │                     │                               │
        │   │ NO                  ▼                               │
        │   └────────────── ◇ Determination ◇                    │
        │                      of evolution as to                 │
        │                      ·k ·control                        │
        │                         module ◇                        │
        │                   YES   │    ◄──────────────────────┐   │
        │                         ▼                           │   │
        │              ┌─────────────────────┐                │   │
        │              │Control by control modules            │   │
        │              │in reflection layer and│              │   │
        │              │   learning layer     │               │   │
        │              └─────────────────────┘                │   │
        │                         │                           │   │
        │                         ▼                  not       │   │
        │                 ◇ Operates  ◇          improved      │   │
        │                 evolutionary adaptation ─────────────┘   │
        │                 layer at constant intervals            │
        │                 and evaluates performance of            │
        │                 respective control                     │
        │                      modules ◇                          │
        │                         │                               │
        │                         │  Improved                     │
        └─────────────────────────┘───────────────────────────────┘
```

**Figure 4**

**Figure 5**

EP 0 957 416 B1

Figure 6

Intake air charge control module

Dynamic characteristic modification

| Static characteristic modification | Presumed throttle input | Primary Lag Filter | Incomplete differential filter | Throttle valve opening |

Throttle input x1

$$x2 = f(x1)$$

x2

$$\frac{1}{1+Txs}$$

$$\frac{\alpha \times Td \times S}{1+\eta \times Td \times S}$$

+ +

y

1

**Figure 7**

Figure 8

Throttle
Opening

Input

time

Throttle
Valve
Opening

Primary lag

Throttle
Valve
Opening

Incomplete differentiation

Throttle
Valve
Opening

Primary lag and
incomplete differentiation

time

**Figure 9**

EP 0 957 416 B1

A/F Control Module

External
information

Educator data
for learning

Objective air fuel
ratio calculation
section

Fuel injection amount
determination unit

Engine forward
module

+   +   −

Evolutinary adaptation
layer
Learning layer

Amount of fuel injection

**Figure 10**

o1

h1

i1

Normalized throttle
valve opening →

Time constant of
primary lag

o2

Adjusted
coefficient
of acceleration

i2

h2

Normalized
engine speed →

o3

Differentiation
time

**(a)**

**Figure 11**

h1

i1

Normalized throttle
valve opening →

o1

Adjusted amount
of objective
air fuel ratio

i2

h2

Normalized
engine speed →

**(b)**

**Figure 11**

Start

**Step 1** — Creates 10 individuals An (n=1-1O) by encoding with coupline coefficients of neural network of drivability module

**Step 2** — Determines output x of neural network of drivability module using coupling coefficients of individual An

**Step 3** — Determines output y1 of drivability module from output x of neural network

**Step 4** — Determine output y2 of control module of learning hierarchy

**Step 5** — Controls engine using control parameter y1 + y2

**Step 6** — Inputs evaluation value

**Step 7** — Evaluates adaptability of individual An

**Step 8** — Evaluated adaptablity of all individuals ?  N

Y

**Step 9** — Evaluated through all of generations ?  Y

N  **Step 10** — Selects some parent individuals from 10 individuals

**Step 11** — Creates next generation group composed of 10 offspring individuals
• cross • over mutation

**Step 12** — Selects elite (most adapted individual) from 10 individuals

**Step 13** — Fixes neural network of drivability module with coupling coefficients of most adapted individual

Advances to learning processes of learning control module

**Figure 12**

Figure 13

EP 0 957 416 B1

Start

Creates 10 individuals Bn (n=1-10) by encoding with coupline coefficients of neural network of drivability module — **Step 1**

Determines output x of neural network of drivability module using coupling coefficients of individual Bn — **Step 2**

Determines output y1 of drivability module from output x of neural network — **Step 3**

Determine output y2 of control module of learning hierarchy — **Step 4**

Controls engine using control parameter y1 + y2 — **Step 5**

Calculating preliminary evaluation value — **Step 6**

**Step 7**

Executed pre-set cycles of preliminary evaluation — N

Y

Total evaluation process — **Step 8**

**Step 9**

Evaluated through all of generations ? — Y

N — **Step 10**

Selects some parent individuals from 10 individuals

**Step 11**

Creates next generation group composed of 10 offspring individuals
• cross • over mutation

**Step 12**

Selects elite (most adapted individual) from 10 individuals

**Step 13**

Fixes neural network of drivability module with coupling coefficients of most adapted individual

Advances to learning processes of learning control module

**Figure 14**

EP 0 957 416 B1

hl

il

Normalized throttle —→ ○ ————→ ○
valve opening

ol
○ ——→ Adjusted amount of
objective air fuel ratio

i2    h2

Normalized ——→ ○ ————→ ○
engine speed

| hl-ol | il-hl | i2-hl | il-h2 | i2-h2 | i2-ol |
|-------|-------|-------|-------|-------|-------|

| Individual B (1) | 0 | 0 | 0 | 0 | 0 | 0 |
|---|---|---|---|---|---|---|

| Individual B (8) | 2.8 | -0.2 | 1.5 | 3.9 | 1.0 | -0.8 |
|---|---|---|---|---|---|---|

| Individual B (10) | 3.9 | -0.2 | -1.5 | 2.8 | 0.8 | 1.0 |
|---|---|---|---|---|---|---|

## Figure 15

Figure 16

EP 0 957 416 B1

Evolutionary - Adaptation Layer

Throttle

Engine Speed

Drivabiltiy module most adapted individual

Fuel efficiency module most adapted individual

Adjusted amount of objective air fule ratio

Learning Layer

Throttle

Engine Speed

Drivabiltiy module characteristic 1

Fuel efficiency module characteristic 1

Adjusted amount of electronic throttle control parameters

Obtained input and output data which are data of actual running operation (painted out)

Each module has each input and output data because of independent evaluations

Throttle Input

Engine Speed

Objective air fuel ratio output data

Throttle Input

Engine Speed

Electronic throttle valve control parameters output data

**Figure 17**

Learning

Pile of educator data

CMAC

**Figure 18**

```
                        ┌──────────┐
                        │  Start   │
                        └──────────┘
                             │
                             ▼
                  ┌────────────────────────┐
                  │      Sets static       │
                  │ characteristic of throttle │
                  └────────────────────────┘
```

Start

Sets static characteristic of throttle

Evolves fuel efficiency module

Evolves drivability module

Controls fuel injection by control modules in reflection layer and learning layer

Controls electronic throttle valve by control modules in reflection layer and learning layer

not improved    Evaluates fuel efficiency by evolutionary-adaptation layer at constant intervals

Evaluates drivability by evolutionary-adaptation layer at constant intervals    not improved

improved

improved

**Figure 19**

33

```
                    ┌───────────┐
                    │   Start   │
                    └───────────┘
                          │
        ┌─────────────────────────────────────┐
        │    First control module is evolved   │
        │    (second control module is fixed)  │
        └─────────────────────────────────────┘
                          │
        ┌─────────────────────────────────────┐
        │   Second control module is evolved   │
        │    (first control module is fixed)   │
        └─────────────────────────────────────┘
                          │
        ┌─────────────────────────────────────┐
        │     Control in reflection layer      │
        │  using control parameters adjusted   │
        │  with value given by learning layer  │
        └─────────────────────────────────────┘
                          │
                     ╱─────────╲
   not improved    ╱  Direct    ╲    improved
  ◄───────────────╱  instruction  ╲───────────►
                  ╲  by user or    ╱
                   ╲ periodic     ╱
                    ╲ evaluation ╱
                     ╲ by system╱
                      ╲────────╱
```

**Figure 20**